# EUROPEAN PATENT SPECIFICATION

(11) **EP 3 927 582 B1**
(45) Date of publication and mention of the grant of the patent: **25.10.2023**
(21) Application number: 19916478.1
(22) Date of filing: 18.11.2019
(51) Int. Cl.: B60R 13/10, G06K 19/07

(54) **A VEHICLE LICENSE PLATE**
FAHRZEUGKENNZEICHEN
PLAQUE D'IMMATRICULATION DE VÉHICULE

(30) Priority: 18.02.2019 AU 2019900510
(43) Date of publication of application: 29.12.2021
(73) Proprietor: Licensys Australasia Pty Ltd, Sumner, Queensland 4074 (AU)
(72) Inventor: MCNEILAGE, Timothy, Wacol, Queensland 4076 (AU); PRETORIUS, Albertus Jacobus, Sumner, Queensland 4074 (AU)
(74) Representative: Haseltine Lake Kempner LLP
(86) International application number: PCT/AU2019/051269
(87) International publication number: WO 2020/168375

(56) References cited:
- EP-A1- 2 810 828
- SK-U1- 500 842 017
- US-A1- 2005 046 573
- US-A1- 2018 047 312
- US-B2- 8 344 890
- US-B2- 9 147 145

## Description

### TECHNICAL FIELD

The present invention generally relates to a vehicle license plate (also colloquially called blank plate or blank) fitted with a radio frequency identification (RFID) tag. The present invention has particular, although not exclusive application for e-tolling and enforcement purposes.

### BACKGROUND

The reference to any prior art in this specification is not, and should not be taken as an acknowledgement or any form of suggestion that the prior art forms part of the common general knowledge.

Vehicle plates are manufactured using either plastic sheeting (typical thickness ≥ 3 mm) or metal sheeting (typical thickness ≥ 0.8 mm). Most plates use a retro-reflective sheeting as background with opaque letters on it. In some cases, the characters are reflective with the background opaque. In some countries, like Australia, the background is overlaid with an image and/or pattern. This image/pattern is largely for aesthetic reasons and attracts a premium price. The retro-reflective sheeting and printing are typically applied to the back of a plastic plate and to the front of a metal plate. Metal plates are typically embossed with a border to improve stiffness. Characters on metal plates are also typically embossed. The embossed areas are covered with ink using rollers (known in the industry as inking) or epoxy film (known in the industry as foiling) to create accurate character images. This embossment may be reversed to raise the background resulting in reflecting characters.

A metal plate can be fitted with an on-metal RFID tag. In this case the plate acts as the conducting ground plane of the tag antenna. As such, the plate size and the metal parts of the vehicle behind the plate impacts the RF performance of which a typical impact is to reduce the forward aperture of the tag antenna radiation pattern. This in turn limits the ability to read the tag from overhead, side and in-road readers. The tag size (footprint and thickness) is limited since the tag shall not obscure the ability to read the characters on the plate. The RF performance is also impacted by the placement of the tag on the plate since the metal surface on which the tag is placed should overlap the tag by at least a factor (based on the tag antenna design) of the frequency; which is ~20 mm at the UHF frequencies. Embossment, aesthetic and security elements of the plate may also impact the RF performance (read range and aperture). On-metal tags, as a result, are marginally effective for the identification of vehicles on open roads.

A metal plate can also be fitted with an in-metal embedded tag. These tags typically use the plate as the tag antenna. Slot tag antennas are a preferred embodiment. In-metal embedded tags suffers the same limitations than on-metal tags, especially from the impact of the vehicle parts and shape, since the plate, used as an antenna, will radiate forwards along the road, but also backwards to the vehicle. The backwards signal is reflected by the metal parts of the vehicle which then interfere with the forwards radiation. These reflections are difficult to control and often require a specific design for a specific vehicle and plate placement. In-metal embedded can also not be used directly on a metal surface. Many vehicle's plate attachment is directly on metal.

A plastic plate can also be fitted with a RFID tag. In this case, both the vehicle body metal and the dielectric effect of the plastic base used pose a challenge. The most common retro-reflective sheeting used in the construction of vehicle license plates are metalized. A plastic plate with metalized retro-reflective sheeting poses a bigger RFID challenge. Modern non-metalized retro-reflective sheeting (called prismatic retro-reflective sheeting) is now available, and is durable enough to be used on vehicle license plates. This, however, does not resolve the RFID challenges faced by dense plastic plates, since the highly variable vehicle metal body still poses a big RF challenge. US 2005/0046573 A1 discloses a selective metal removal process for metallized retro-reflective and holographic films, and RF devices made using the process. The metallized layer can be selectively exposed to the demetallizing solution using a flexographic printing process wherein printing rollers are used to transfer the demetallizing solution to the metallized surface.

Prior art, similar in design of this invention, uses a cavity slot antenna in a hollow plastic plate. In effect the plate is constructed to limit the backwards radiation, to eliminate the impact of the vehicle's metal body. The direct placement of the plate on metal issue is resolved, though the aperture reduction effect is not. Undesirably, the body of the cavity slot plate needs to be enclosed by a conducting layer to form a Faraday cage. The slot is formed in the front conducting layer of the plate wherein a RFID tag is placed to allow the slot to become a resonating slave antenna of the tag. The slotted cavity poses challenges for mass manufacturing, especially when considering that a vehicle license plate is a commodity under severe cost pressure.

The preferred embodiment provides for improved plate manufacturing and/or reduces substantially the impact of the plate placement and vehicle on the RF performance.

The slot antennas (be it in the plate or in a cavity), by its nature, has a narrow aperture. The desired aperture should ideally be wide both in the vertical and horizontal planes when considering a vehicle mounted plate so that roadside, in-road and overhead antennas will detect all vehicle plates. Often plates are tilted by users to avoid detection by cameras. The downward facing plate, due to directionality of the cavity slot antenna, will most likely not be read by an overhead reader. Similarly, a side reader will have read challenges. Although an enforcement officer with a handheld reader must be a safe distance away from the traveling path of the vehicle, the face-on angle from which the plate can be read is increased which reduces safety.

An additional issue with slot antennas lies in their inherent linear polarity. The best-read performance with RFID is achieved when both the reader and the tag uses the same linear polarisation. The common practice for windscreen RFID labels is to place them horizontally. Services, like parking and electronic tolling, therefore use horizontally polarised antennas. The slot antenna for various RF reasons, but mostly because a horizontal slot fits the structure of a plate, has a vertical polarisation (a slot antenna is an inverse of a di-pole antenna). Accordingly, reading services are forced to undesirably use cross or circular polarised reader antennas with an unavoidable performance penalty of at least 3 dB.

The preferred embodiment provides for improved RF reading of the license plate tag when compared with a slot antenna.

Other prior art involves the use of on-metal RFID tags. On-metal tags are designed to be placed directly on vehicle metal, and by their nature have a directional radiation pattern, typically with an overly narrow aperture for the vehicle identification.

On-metal tags and in-metal embedded tags need to be placed on or in the face of the plate which restricts the placement and the size of the on-metal tag. Owing to radio signal propagation, an on-metal and in-metal tag needs to be placed so that there is ample metal on all sides of the tag in the mounting plane. The ideal position is in the center of the plate, however, doing so would undesirably interfere with the image readability of the plate, reduce the on-metal tag's size and also reduce its efficiency.

The preferred embodiment avoids obscuring the image readability of the plate.

### SUMMARY OF THE INVENTION

According to one aspect of the present invention, there is provided a vehicle license plate with the features of claim 1.

Advantageously, the tag is spaced from the shield by the spacer which may provide a wider beam to improve reading of the tag when compared with a cavity slot antenna tag. The shield may be expansive compared with the compact tag to mitigate the effects of variances of the metal body of the vehicle and thereby improve tag reading.

The tag may be embedded within the spacer to avoid obscuring during image readability of the plate. The spacer is hollow. The spacer includes internal ribs. The ribs may be located between a planar base and a planar lid. The ribs define recesses in which the tag is located. The tag is flush with the ribs when located in the recesses.

The spacer may be non-conductive. The spacer may be non-metallic. The spacer may be plastic. The spacer may have a low relative permittivity (εr) and a similar dielectric value to air. The spacer may be about 8 to 10mm thick, greater than 100mm high and/or greater than 150 mm wide.

The shield may include metal. The shield may be metalised on only one side, with that side facing the vehicle.

The license plate may further include another shield (or matching layer) between the tag and the shield. The other shield may be located between the shield and an antenna of the tag. The tag may include a cross-polarised antenna. The other shield may be conductive or metal, acting as a DC ground for electrostatic discharge and shielding the tag from reflected RF waves from the shield. The other shield may be integrally formed with the tag.

The license plate may further include retro-reflective sheeting located adjacent the tag. The license plate may further include an image layer located adjacent the retro-reflective sheeting. The image layer may include a background image and/or characters, without the need for fasteners which could otherwise degrade the image readability of the plate. The license plate may further include an endmost transparent layer.

According to another aspect of the present invention, there is provided a method for manufacturing a vehicle license plate, the method involving:
providing a radio-frequency (RF) shield which is to be located adjacent a vehicle;
locating spacer adjacent, and superposed with, the shield; and
spacing a radio frequency identification (RFID) tag from the shield using the spacer, the RFID tag being superposed with the spacer and including an antenna superposed with respect to a circuitry active component, in turn, superposed with the spacer. The spacer is hollow and includes internal ribs, the ribs defining recesses in which the RFID tag is located and the RFID tag being flush with the ribs when located in the recesses.

Advantageously, the plate may be readily assembled in layers, with minimum parts and processing, to provide for improved plate manufacturing.

The method may involve attaching a plate to embed the tag within the spacer. The method may involve affixing another plate to the spacer.

The method may involve affixing a retro-reflective sheeting adjacent the spacer. The method may involve affixing an image layer adjacent the retro-reflective sheeting.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1 is a cross sectional view of a partial vehicle license plate in accordance with an embodiment of the present invention;
Figure 2a is a radiation pattern of a known vehicle license plate with a cavity slot antenna;
Figure 2b is a radiation pattern of the vehicle license plate of Figure 1; and
Figure 3 is an exploded perspective view of the complete vehicle license plate of Figure 1.

### DETAILED DESCRIPTION OF PREFERRED EMBODIMENTS

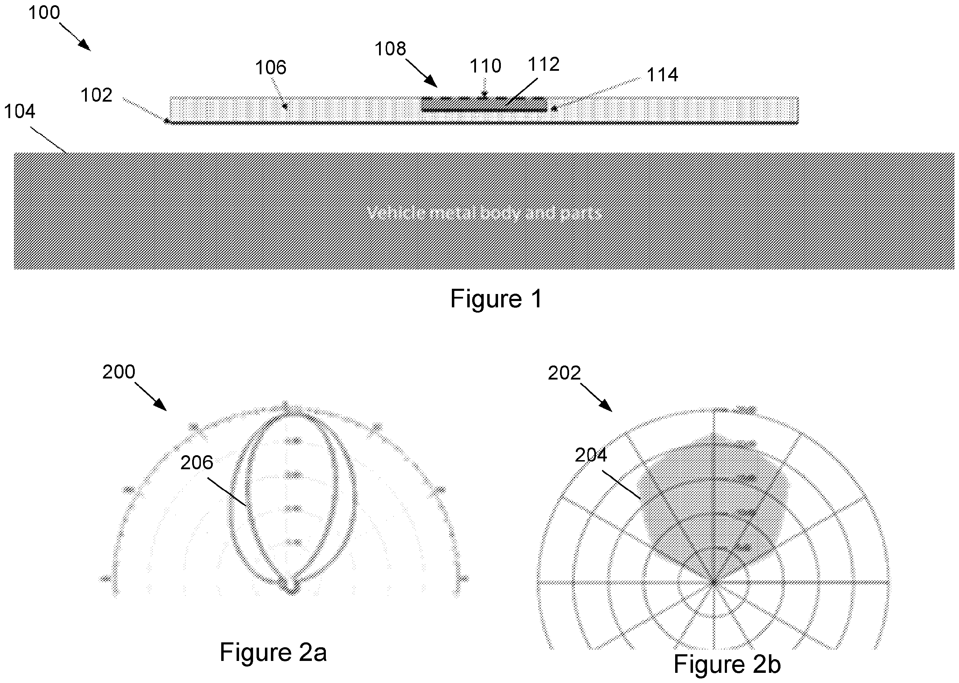

According to an embodiment of the present invention, there is provided a multilayered vehicle license plate 100 as shown in Figure 1. The license plate 100 includes a radio-frequency (RF) base shield 102 for locating adjacent a vehicle 104. A hollow plastic spacer 106 is provided for locating adjacent the base shield 102.

The license plate 100 further includes a UHF RFID tag 108 (i.e. passive transponder) spaced from the shield 102 by the spacer 106. The tag 108 includes an upper antenna 110, and a lower circuitry active component 112. An antenna matched shield 114 is provided at the base of the tag 108 to shield it from reflected RF signals from the base shield 102.

Figure 2a shows a narrow radiation pattern 200 for a vehicle license plate with a cavity slot antenna, whereas Figure 2b shows a wide radiation pattern 202 for the vehicle license plate 100. Advantageously, the tag 108 is spaced from the base shield 102 by the spacer 106 which provides a wider beam envelope 204 to improve reading of the tag 108 when compared with the narrower beam envelope 206 of the cavity slot antenna tag. The aperture of the tag 108 in both the horizontal and vertical planes is increased

RFID tag reading involves a technique of modulating radar where the reader emits a strong signal to the tag 108. The strong signal powers the passive tag 108. The reader modulates the signal to communicate a message to the tag 108, emitting a constant wave (CW) when listening for a response message from the tag 108. The tag 108 modulates the reflected signal to communicate the message to the reader. The base shield 102 is expansive compared with the compact tag 108, to mitigate the ground effects or variances of the metal body of the vehicle 104, thereby improving tag reading.

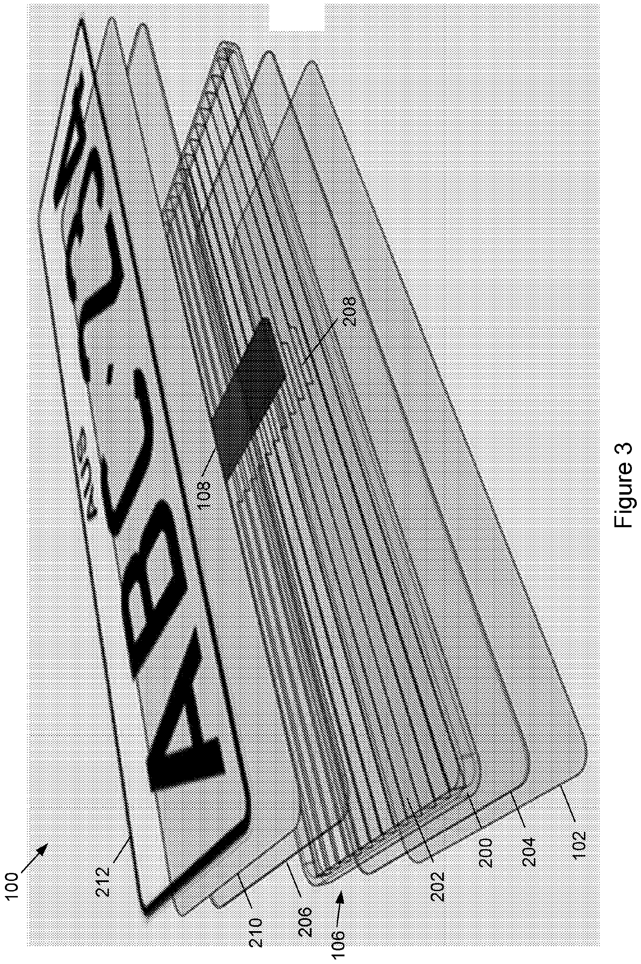

Figure 3 shows the complete vehicle license plate 100 in detail. The tag 108 is embedded within the spacer 106 (and plate 100) which advantageously avoids obscuring of the characters during image reading of the plate 100. The spacer 106 includes a middle layer 200. The middle layer 200 defines internal longitudinal ribs 202 defining separated parallel hollow channels. The spacer 106 also includes a planar base 204 and a planar lid 206 between which the middle layer 200 is sandwiched. The ribs 202 define upper recesses 208 in which the tag 108 is located. The tag 108 sits flush with the top of the ribs 202 when located in the recesses 208.

The light-weight spacer 106 is non-conductive and non-metallic. The spacer components 200-206 are typically formed from plastic, having a low relative permittivity (εr) and a similar dielectric value to air yielding low RF interference. The spacer 106 is about 8 to 10mm thick, greater than 100mm high and greater than 150 mm wide.

The base shield 102 is metalised. The tag antenna 110 is located on the opposite non-metalised side of the base shield 102. The base shield 102 forms a RF shield, and results in strong reflection when compared with the reflection from the tag antenna 110.

Turning briefly again to Figure 1, the matched shield 114 (or matching layer) forms the base of the tag 108, and is located between the tag antenna 110 and the base shield 102. It is matched with the tag antenna 110. The matched shield 114 is also conductive or metal, acting as a DC ground for electrostatic discharge and shielding the tag 108 from reflected RF waves from the base shield 102. The floating tag antenna 110 has a high level of immunity from the variable size base shield 102 and the unpredictable vehicle metal body 104. This foregoing construction provides the freedom of size to use a cross polarised antenna 110.

Returning to Figure 3, the license plate 100 further includes non-metalised retro-reflective sheeting 210 located adjacent the spacer lid 206 and the tag 108. The license plate 100 further includes an image layer 212 located adjacent the retro-reflective sheeting 210. The image layer 212 includes a background image and characters (e.g. ABC-234) in the foreground. The image layer 212 can applied through any combination of printing, lasering, etching, micro embossing, sand basting, foiling (hot and cold methods) or other method on either or both the retro-reflective sheeting 210 and the top lid 206. There is no need for fasteners which could otherwise degrade the image readability of the plate 100 or interfere with the RF.

The plate 100 improves both the image readability and the RFID readability when compared to current standard and RFID enabled vehicle license plates. The plate 100 also reduces the manufacturing complexity and associated costs, and increases the freedom of adding personalised features to image layer 212 of the plate 100. The tag 108 is embedded to protect the tag-antenna radiation pattern from the effects of the highly variable metal bodies of vehicles 104.

A method for manufacturing a vehicle license plate is now briefly described.

Initially, the tag 108 with matching shield 114 is located within the spacer 106. In particular, the rib recesses 208 receive the tag 108, and the spacer middle layer 200 is securely sandwiched between the affixed planar base 204 and planar lid 206.

Next, the assembled spacer 106 is affixed adjacent the base shield 102, with the tag 108 spaced from the base shield 102.

Next, the retro-reflective sheeting 210 is affixed adjacent the assembled spacer 106.

Next, the image layer 212 is affixed adjacent the retro-reflective sheeting 210.

Advantageously, the plate 100 may be readily assembled in layers, with minimum parts and processing, to provide for improved plate manufacturing.

A person skilled in the art will appreciate that many embodiments and variations can be made without departing from the ambit of the present invention.

In the preferred embodiment, the RFID tag 108 has a single unitary construction which incorporates the RFID tag chip 112, antenna radiator 110 and matching shield 114. Other embodiments may separate these parts for RF performance and manufacturing reasons. In one embodiment, the spacer middle layer 200 may independently receive the matching shield 114, which is separate from the antenna 110 and circuitry 112 of the tag 108.

In one embodiment, the top lid 206 of the spacer 106 includes a recess for receiving the tag 108.

In one embodiment, the spacer middle layer 200 is integrally formed with one or both of the planar base 204 and planar lid 206.

In one embodiment, the base shield 102 include sheeting, metallisation or conducting inks and epoxies.

In one embodiment, the bottom lid 204 may be made from a conducting material, including for example conducting plastics, in which case the base shield 102 is absent.

The top three plate layers 206, 210, 212 are interchangeable, with the retro-reflective sheeting 210 always lower in the stack than the image layer 212. A transparent top lid may be placed on top of the stack to provide the following advantages:
- It protects the image layer 212.
- It may contain security features such as transparent holographic images and water marks.
- It may be textured for both aesthetic and security reasons.
- It may allow for the independent forming and image application in a reel-to-reel (continuous flow) manner. In this case the strip of top layer 206 can be used in the manufacturing process as a conveyer belt upon which the other components are added. The layer 206 is wider then the spacer 202 to which it is adhered. The last step will be to cut (mechanical or by laser) the plate 100 from the "conveyer belt".

In one embodiment, the retro-reflective sheeting 210 and the spacer lid 206 can be reversed.

In compliance with the statute, the invention has been described in language more or less specific to structural or methodical features. It is to be understood that the invention is not limited to specific features shown or described since the means herein described comprises preferred forms of putting the invention into effect.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment.

## Claims

1. A vehicle license plate (100) including:
a radio-frequency, RF, shield (102) for locating adjacent a vehicle (104);
a spacer (106) for locating adjacent, and superposed with, the shield (102); and
a radio frequency identification, RFID, tag (108) spaced from the shield (102) by the spacer (106, the RFID tag (108) being superposed with the spacer (106) and including an antenna (110) superposed with respect to a circuitry active component (112), in turn, superposed with the spacer (106);
**characterized in that**:
the spacer (106) is hollow and includes internal ribs (202), the ribs (202) defining recesses (208) in which the RFID tag (108) is located and the RFID tag (108) being flush with the ribs 202 when located in the recesses 208.

2. A vehicle license plate (100) as claimed in claim 1, wherein the RFID tag (108):
is spaced from the RF shield (102) by the spacer (106) which provides a wider beam to improve reading of the RFID tag (108) when compared with a slot antenna tag; or
is embedded within the spacer to avoid obscuring during image readability of the plate.

3. A vehicle license plate (100) as claimed in claim 1, wherein the RF shield (102):
is expansive compared with the compact RFID tag (108) to mitigate the effects of variances of the metal body of the vehicle (104) and thereby improve tag reading; or
includes metal.

4. A vehicle license plate (100) as claimed in claim 1, wherein the spacer (106) is non-conductive and non-metallic, the spacer (106) preferably being plastic with a low relative permittivity (εr) and a similar dielectric value to air.

5. A vehicle license plate (100) as claimed in claim 1, further including another RF shield (114), or matching layer matched to the antenna size of the RFID tag (108), between the RFID tag (108) and the RF shield (102).

6. A vehicle license plate (100) as claimed in claim 5, wherein the other RF shield (114):
is located between the RF shield (102) and an antenna (110) of the RFID tag (108), the other RF shield (114) being conductive or metal thereby acting as a DC ground for electrostatic discharge and shielding the RFID tag (108) from reflected RF waves from the RF shield (102); or
is integrally formed with the RFID tag (108), the RFID tag (108) preferably including a cross-polarised antenna (110).

7. A vehicle license plate (100) as claimed in claim 1, further including retro-reflective sheeting located adjacent the RFID tag (108).

8. A vehicle license plate (100) as claimed in claim 7, further including an image layer (212) located adjacent the retro-reflective sheeting (210), the image layer (212) including a background image and/or characters, without the need for fasteners which could otherwise degrade the image readability of the plate (100).

9. A vehicle license plate (100) as claimed in claim 1, further including an endmost transparent layer.

10. A method for manufacturing a vehicle license plate (100), the method involving:
providing a radio-frequency, RF, shield (102) which is to be located adjacent a vehicle (104);
locating a spacer (106) adjacent, and superposed with, the RF shield (102); and
spacing a radio frequency identification, RFID, tag (108) from the RF shield (102) using the spacer (106), the RFID tag (108) being superposed with the spacer (106) and including an antenna (110) superposed with respect to a circuitry active component (112), in turn, superposed with the spacer (106);
**characterized in that**:
the spacer (106) is hollow and includes internal ribs (202), the ribs (202) defining recesses (208) in which the RFID tag (108) is located and the RFID tag (108) being flush with the ribs (202) when located in the recesses (208).

11. A method for manufacturing a vehicle license plate (100) as claimed in claim 10, wherein the plate (100) is assembled in layers, to provide for improved plate manufacturing.

12. A method for manufacturing a vehicle license plate (100) as claimed in claim 10, further involving:
attaching a plate (206) to embed the RFID tag (108) within the spacer (106);
affixing another plate (204) to the spacer (106);
affixing a retro-reflective sheeting (210) adjacent the spacer (106); and
affixing an image layer (212) adjacent the retro-reflective sheeting (210).

13. A method for manufacturing a vehicle license plate (100) as claimed in claim 10, wherein a strip forms a conveyer belt upon which other components of the plate (100) are added.

14. A method for manufacturing a vehicle license plate (100) as claimed in claim 13, wherein the strip forms a spacer lid located adjacent the spacer (106).

15. A method for manufacturing a vehicle license plate (100) as claimed in claim 13, further involving cutting the plate (100) from the conveyer belt.

## Patentansprüche

1. Fahrzeugkennzeichen (100), beinhaltend:
eine Radiofrequenz-(RF-)Abschirmung (102) zum Anordnen neben einem Fahrzeug (104);
einen Abstandshalter (106) zum Anordnen neben und über der Abschirmung (102); und
ein Radiofrequenz-Identifikations-(RFID-)Tag (108), das durch den Abstandshalter (106) von der Abschirmung (102) beabstandet ist, wobei das RFID-Tag (108) von dem Abstandshalter (106) überlagert wird und eine Antenne (110) beinhaltet, die in Bezug auf eine aktive Schaltungskomponente (112) überlagert wird, die ihrerseits von dem Abstandshalter (106) überlagert wird;
**dadurch gekennzeichnet, dass**:
der Abstandshalter (106) hohl ist und innere Rippen (202) beinhaltet, wobei die Rippen (202) Aussparungen (208) definieren, in denen das RFID-Tag (108) angeordnet ist, und das RFID-Tag (108) bündig mit den Rippen 202 abschließt, wenn es in den Aussparungen 208 angeordnet ist.

2. Fahrzeugkennzeichen (100) nach Anspruch 1, wobei das RFID-Tag (108):
durch den Abstandshalter (106) von der RF-Abschirmung (102) beabstandet ist, was einen breiteren Strahl bereitstellt, um das Lesen des RFID-Tags (108) im Vergleich zu einem Schlitzantennen-Tag zu verbessern; oder
in den Abstandshalter eingebettet ist, um eine Verschleierung bei der Bildlesbarkeit des Kennzeichens zu vermeiden.

3. Fahrzeugkennzeichen (100) nach Anspruch 1, wobei die RF-Abschirmung (102):
im Vergleich zu dem kompakten RFID-Tag (108) weiter ausgedehnt ist, um die Auswirkungen von Abweichungen in der Metallkarosserie des Fahrzeugs (104) abzumildern und dadurch das Lesen des Tags zu verbessern; oder
Metall beinhaltet.

4. Fahrzeugkennzeichen (100) nach Anspruch 1, wobei der Abstandshalter (106) nicht leitend und nicht metallisch ist, wobei der Abstandshalter (106) vorzugsweise aus Kunststoff mit einer niedrigen relativen Permittivität (εr) und einem ähnlichen dielektrischen Wert wie Luft besteht.

5. Fahrzeugkennzeichen (100) nach Anspruch 1, ferner beinhaltend eine weitere RF-Abschirmung (114) oder eine an die Antennengröße des RFID-Tags (108) angepasste Anpassungsschicht zwischen dem RFID-Tag (108) und der RF-Abschirmung (102).

6. Fahrzeugkennzeichen (100) nach Anspruch 5, wobei die weitere RF-Abschirmung (114):
zwischen der RF-Abschirmung (102) und einer Antenne (110) des RFID-Tags (108) angeordnet ist, wobei die weitere RF-Abschirmung (114) leitend oder aus Metall ist und dadurch als Gleichstromerdung für elektrostatische Entladung fungiert und das RFID-Tag (108) gegen von der RF-Abschirmung (102) reflektierte RF-Wellen abschirmt; oder
in einem Stück mit dem RFID-Tag (108) ausgebildet ist, wobei das RFID-Tag (108) vorzugsweise eine kreuzpolarisierte Antenne (110) beinhaltet.

7. Fahrzeugkennzeichen (100) nach Anspruch 1, das ferner eine retroreflektierende Folie beinhaltet, die neben dem RFID-Tag (108) angeordnet ist.

8. Fahrzeugkennzeichen (100) nach Anspruch 7, das ferner eine Bildschicht (212) beinhaltet, die neben der retroreflektierenden Folie (210) angeordnet ist, wobei die Bildschicht (212) ein Hintergrundbild und/oder Zeichen beinhaltet, ohne dass Befestigungselemente erforderlich sind, die andernfalls die Bildlesbarkeit des Kennzeichens (100) beeinträchtigen könnten.

9. Fahrzeugkennzeichen (100) nach Anspruch 1, das ferner eine endseitige transparente Schicht beinhaltet.

10. Verfahren zum Herstellen eines Fahrzeugkennzeichens (100), wobei das Verfahren umfasst:
Bereitstellen einer Radiofrequenz-(RF-)Abschirmung (102), die neben einem Fahrzeug (104) angeordnet werden soll;
Anordnen eines Abstandshalters (106) neben und über der RF-Abschirmung (102); und
Beabstanden eines Radiofrequenz-Identifikations-(RFID-)Tags (108) von der RF-Abschirmung (102) durch den Abstandshalter (106), wobei das RFID-Tag (108) von dem Abstandshalter (106) überlagert wird und eine Antenne (110) beinhaltet, die in Bezug auf eine aktive Schaltungskomponente (112) überlagert wird, die ihrerseits von dem Abstandshalter (106) überlagert wird;
**dadurch gekennzeichnet, dass**:
der Abstandshalter (106) hohl ist und innere Rippen (202) beinhaltet, wobei die Rippen (202) Aussparungen (208) definieren, in denen das RFID-Tag (108) angeordnet ist, und das RFID-Tag (108) bündig mit den Rippen 202 abschließt, wenn es in den Aussparungen 208 angeordnet ist.

11. Verfahren zum Herstellen eines Fahrzeugkennzeichens (100) nach Anspruch 10, wobei das Kennzeichen (100) in Schichten zusammengesetzt wird, um ein verbessertes Kennzeichenherstellen zu ermöglichen.

12. Verfahren zum Herstellen eines Fahrzeugkennzeichens (100) nach Anspruch 10, ferner umfassend:
Anbringen einer Platte (206), um das RFID-Tag (108) in den Abstandshalter (106) einzubetten;
Befestigen einer weiteren Platte (204) am Abstandshalter (106); Anbringen einer retroreflektierenden Folie (210) neben dem Abstandshalter (106); und
Anbringen einer Bildschicht (212) neben der retroreflektierenden Folie (210).

13. Verfahren zum Herstellen eines Fahrzeugkennzeichens (100) nach Anspruch 10, wobei ein Streifen ein Transportband bildet, auf dem andere Komponenten des Kennzeichens (100) hinzugefügt werden.

14. Verfahren zum Herstellen eines Fahrzeugkennzeichens (100) nach Anspruch 13, wobei der Streifen einen Abstandshalterdeckel bildet, der neben dem Abstandshalter (106) angeordnet ist.

15. Verfahren zum Herstellen eines Fahrzeugkennzeichens (100) nach Anspruch 13, ferner umfassend das Abschneiden des Kennzeichens (100) von dem Transportband.

## Revendications

1. Plaque d'immatriculation de véhicule (100) comportant :
un blindage (102) radiofréquence, RF, destiné à être positionné à proximité d'un véhicule (104) ;
une entretoise (106) destinée à être positionnée à proximité du blindage (102) et superposée à celui-ci ; et
une étiquette d'identification par radiofréquence, RFID, (108) espacée du blindage (102) par l'entretoise (106), l'étiquette RFID (108) étant superposée à l'entretoise (106) et comportant une antenne (110) superposée par rapport à un composant actif de circuit (112), lui-même superposé à l'entretoise (106) ;
**caractérisée en ce que** :
l'entretoise (106) est creuse et comporte des nervures (202) internes, les nervures (202) définissant des évidements (208) dans lesquels l'étiquette RFID (108) est positionnée et l'étiquette RFID (108) affleurant les nervures 202 lorsqu'elle est positionnée dans les évidements 208.

2. Plaque d'immatriculation de véhicule (100) selon la revendication 1, dans laquelle l'étiquette RFID (108) :
est espacée du blindage (102) RF par l'entretoise (106) qui fournit un faisceau plus large pour améliorer la lecture de l'étiquette RFID (108) par rapport à une étiquette d'antenne à fente ; ou
est intégrée dans l'entretoise pour éviter l'obscurcissement lors de la lisibilité de l'image de la plaque.

3. Plaque d'immatriculation de véhicule (100) selon la revendication 1, dans laquelle le blindage (102) RF :
est expansif par rapport à l'étiquette RFID (108) compacte pour atténuer les effets des variations de la carrosserie métallique du véhicule (104) et ainsi améliorer la lecture de l'étiquette ; ou
comporte du métal.

4. Plaque d'immatriculation de véhicule (100) selon la revendication 1, dans laquelle l'entretoise (106) est non conductrice et non métallique, l'entretoise (106) étant de préférence en plastique avec une faible permittivité relative (εr) et une valeur diélectrique semblable à l'air.

5. Plaque d'immatriculation de véhicule (100) selon la revendication 1, comportant en outre un autre blindage RF (114), ou une couche d'adaptation adaptée à la taille d'antenne de l'étiquette RFID, (108) entre l'étiquette RFID (108) et le blindage (102) RF.

6. Plaque d'immatriculation de véhicule (100) selon la revendication 5, dans laquelle l'autre blindage RF (114) :
est positionné entre le blindage (102) RF et une antenne (110) de l'étiquette RFID (108), l'autre blindage RF (114) étant conducteur ou métallique agissant ainsi comme une masse CC pour la décharge électrostatique et protégeant l'étiquette RFID (108) des ondes RF réfléchies par le blindage (102) RF ; ou
est intégralement formé avec l'étiquette RFID (108), l'étiquette RFID (108) comportant de préférence une antenne à polarisation croisée (110).

7. Plaque d'immatriculation de véhicule (100) selon la revendication 1, comportant en outre une feuille rétroréfléchissante positionnée à proximité de l'étiquette RFID (108) .

8. Plaque d'immatriculation de véhicule (100) selon la revendication 7, comportant en outre une couche d'image (212) positionnée à proximité de la feuille rétroréfléchissante (210), la couche d'image (212) comportant une image d'arrière-plan et/ou des caractères, sans nécessiter de fixations qui pourraient autrement dégrader la lisibilité de l'image de la plaque (100).

9. Plaque d'immatriculation de véhicule (100) selon la revendication 1, comportant en outre une couche transparente la plus éloignée.

10. Procédé de fabrication d'une plaque d'immatriculation de véhicule (100), le procédé comportant :
la fourniture d'un blindage (102) radiofréquence, RF, qui doit être positionné à proximité d'un véhicule (104) ;
le positionnement d'une entretoise (106) à proximité du blindage (102) RF et supersposée à celui-ci ; et
l'espacement d'une étiquette d'identification par radiofréquence, RFID, (108) par rapport au blindage (102) RF à l'aide de l'entretoise (106), l'étiquette RFID (108) étant superposée à l'entretoise (106) et comportant une antenne (110) superposée par rapport à un composant actif de circuit (112), lui-même superposé à l'entretoise (106) ;
**caractérisé en ce que** :
l'entretoise (106) est creuse et comporte des nervures (202) internes, les nervures (202) définissant des évidements (208) dans lesquels l'étiquette RFID (108) est positionnée et l'étiquette RFID (108) affleurant les nervures (202) lorsqu'elle est positionnée dans les évidements (208).

11. Procédé de fabrication d'une plaque d'immatriculation de véhicule (100) selon la revendication 10, dans lequel la plaque (100) est assemblée en couches, pour fournir une fabrication de plaque améliorée.

12. Procédé de fabrication d'une plaque d'immatriculation de véhicule (100) selon la revendication 10, comportant en outre :
la fixation d'une plaque (206) pour incorporer l'étiquette RFID (108) à l'intérieur de l'entretoise (106) ;
la fixation d'une autre plaque (204) à l'entretoise (106) ;
la fixation d'une feuille rétroréfléchissante (210) à proximité de l'entretoise (106) ; et
la fixation d'une couche d'image (212) à proximité de la feuille rétroréfléchissante (210).

13. Procédé de fabrication d'une plaque d'immatriculation de véhicule (100) selon la revendication 10, dans lequel une bande forme une bande transporteuse sur laquelle d'autres composants de la plaque (100) sont ajoutés.

14. Procédé de fabrication d'une plaque d'immatriculation de véhicule (100) selon la revendication 13, dans lequel la bande forme un couvercle d'entretoise positionné à proximité de l'entretoise (106).

15. Procédé de fabrication d'une plaque d'immatriculation de véhicule (100) selon la revendication 13, comportant en outre la découpe de la plaque (100) à partir de la bande transporteuse.
